Europäisches Patentamt

European Patent Office

Office européen des brevets

(19)

(11) **EP 0 783 459 B1**

(12) **EUROPÄISCHE PATENTSCHRIFT**

(45) Veröffentlichungstag und Bekanntmachung des Hinweises auf die Patenterteilung:
**30.06.1999  Patentblatt 1999/26**

(21) Anmeldenummer: **95935404.4**

(22) Anmeldetag: **28.09.1995**

(51) Int Cl.6: **C01G 45/00**, C01G 51/00, C01G 53/00, C01G 49/00, H01M 4/48, C01B 13/36

(86) Internationale Anmeldenummer:
**PCT/EP95/03842**

(87) Internationale Veröffentlichungsnummer:
**WO 96/10538 (11.04.1996 Gazette 1996/16)**

(54) **TERNÄRE LITHIUM-MISCHOXIDE, VERFAHREN ZU DEREN HERSTELLUNG SOWIE DEREN VERWENDUNG**

TERNARY LITHIUM MIXED OXIDES, PROCESS FOR THEIR PREPARATION AND THEIR USE

OXYDES MIXTES DE LITHIUM TERNAIRES, LEUR PROCEDE DE PRODUCTION ET LEUR UTILISATION

(84) Benannte Vertragsstaaten:
**AT BE CH DE DK ES FR GB IE IT LI NL SE**

(30) Priorität: **30.09.1994  DE 4435117**

(43) Veröffentlichungstag der Anmeldung:
**16.07.1997  Patentblatt 1997/29**

(73) Patentinhaber:
• **Zentrum Für Sonnenenergie -und Wasserstoff-Forschung Baden-Württemberg Gemeinnützige Stiftung**
**70565 Stuttgart (DE)**
Benannte Vertragsstaaten:
**AT BE CH DE DK ES FR GB IE IT LI NL SE**
• **VARTA Batterie Aktiengesellschaft**
**30405 Hannover (DE)**
Benannte Vertragsstaaten:
**DE FR**

(72) Erfinder:
• **HEMMER, Reinhard, P.**
**D-89257 Illertissen (DE)**
• **OESTEN, Rüdiger**
**D-89075 Ulm (DE)**
• **WOHLFAHRT-MEHRENS, Margret**
**D-89155 Erbach (DE)**
• **ARNOLD, Gisela**
**D-89077 Ulm (DE)**

(74) Vertreter:
**TER MEER STEINMEISTER & PARTNER GbR**
**Mauerkircherstrasse 45**
**81679 München (DE)**

(56) Entgegenhaltungen:
**EP-A- 0 338 799          EP-A- 0 468 942**
**EP-A- 0 556 555          WO-A- 94/25398**
**US-A- 4 567 031          US-A- 5 135 732**

**Beschreibung**

Die vorliegende Erfindung betrifft ternäre Lithium-Mischoxide, insbesondere dotierte Lithium-Mangan-Oxide mit einer Kristallstruktur vom Spinell-Typ, ein Verfahren zu deren Herstellung sowie deren Verwendung, insbesondere als Kathodenmaterial in Lithium-Sekundärbatterien.

Aufgrund ihrer hohen erzielbaren Energiedichte und ihres geringen Gewichts besteht ein wachsender Bedarf an wiederaufladbaren Lithiumbatterien für eine Vielzahl von Anwendungen, sowohl als elektrische Speicher für tragbare elektronische Geräte, wie z.B. Videokameras, Laptop-Computer als auch zukünftig als Traktionsbatterien.

Der Einsatz von elementarem Lithium als Anodenmaterial führt bekanntermaßen aufgrund der Dendritenbildung beim Auflösen und Wiederabscheiden des Lithiums zu einer unzureichenden Zyklenstabilität der Batterie und zu einem erheblichen Sicherheitsrisiko.

Der Versuch, diese Probleme zu lösen, führte zur Entwicklung der sogenannten "Lithium-Ion"- oder "rocking-chair"-Batterie. Deren Funktionsprinzip beruht auf der Verwendung von Elektrodenmaterialien, welche Lithium reversibel interkalieren können, sowohl für die Anode als auch für die Kathode. Derzeit werden üblicherweise eine lithiumhaltige Kohlenstoffverbindung als Anode und ein lithiumhaltiges ternäres Oxidsystem als Kathode verwendet.

Um möglichst hohe Energiedichten erreichen zu können, werden vorzugsweise Kathodenmaterialien verwendet, die Lithium bei Potentialen zwischen 3 und 4 V vs. Li/Li$^+$ interkalieren können. Zu den aussichtsreichsten Materialien, die diesen Anforderungen genügen, gehören ternäre Lithiumverbindungen auf Basis von Cobalt-, Nickel- und Manganoxiden.

Von den Lithium-Manganaten zeigen der Spinell $LiMn_2O_4$ und spinellverwandte Verbindungen (z.B. $Li_4Mn_4O_9$ und $Li_4Mn_5O_{12}$) die besten Eigenschaften als Kathodenmaterialien (Thackeray et al., Mater. Res. Bull. 18, 561 (1983)).

In der Regel werden diese Materialien mittels Festkörperreaktionen durch Zusammenmischen der entsprechenden Oxide und/oder Carbonate und Erhitzen der Mischungen auf höhere Temperaturen hergestellt (US-A-4 980 251; J. Electrochem. Soc., Vol. 138, No. 10, 1991, S. 2859-2864: und JP-A-03-283 356). Dabei entstehen in der Regel stöchiometrische Spinelle mit meistens nur unzureichender Zyklenlebensdauer.

Nach dem derzeitigen Stand der Technik hängen die batterierelevanten Eigenschaften dieser Kathodenmaterialien, insbesondere die der Manganoxide, kritisch von den Herstellungsparametern und speziell von der Reaktionstemperatur ab.

Vorteilhaft ist ein Syntheseverfahren bei möglichst niedrigen Temperaturen, das zu Materialien mit einheitlicher Partikelverteilung führt. Nach US-A-5 135 732 und H. Huang, J. Electrochem. Soc. 141 (1994) L76 lassen sich die entsprechenden Lithiumverbindungen auf der Basis von Cobalt-bzw. Manganoxid auch durch eine Niedrigtemperatursynthese über Acetatvorläufer herstellen.

Durch partielle Reduktion von Permanganatlösungen gelingt ebenfalls die Synthese von Lithium-Manganoxiden bei niedrigen Temperaturen (Bach u.a., J. Solid State Chem. 88 (1988), 325).

Die reinen ternären Oxide verfügen nur über eine begrenzte Zyklenlebensdauer, und es wird häufig eine kontinuierliche Verschlechterung der Kapazität mit steigender Zyklenzahl beobachtet, was auf Änderungen und Defekte in der Gitterstruktur des Wirtsoxids beim Ein- und Ausbau von Lithiumkationen zurückzuführen ist.

Bei allen bisher bekannten Niedrigtemperatursyntheseverfahren, bei denen Kathodenmaterialien mit Spinell- oder spinellverwandten Strukturen entstehen, ist das Produkt ein reines ternäres Oxid oder ein ternäres Oxid, das Beimischungen von Kohle enthält, die nicht im Gitter eingebaut ist.

Der Erfindung liegt die Aufgabe zugrunde, dotierte ternäre Lithium-Mischoxide zur Verfügung zu stellen, welche sich insbesondere als Kathodenmaterial in wiederaufladbaren Lithium-Sekundärbatterien eignen. Ferner soll ein einfaches Verfahren zur Herstellung dieser Mischoxide bereitgestellt werden, das eine gezielte Steuerung von Art und Grad der Dotierungen erlaubt.

Diese Aufgabe wird erfindungsgemäß durch Mischoxide gemäß Anspruch 1 sowie ein Verfahren zu deren Herstellung gemäß Anspruch 4 gelöst. Bevorzugte Ausgestaltungen des Erfindungsgegenstandes sind in den Unteransprüchen angegeben.

Die Erfindung wird anhand der Zeichnungen näher erläutert. Hierbei zeigen:

Fig. 1　das Röntgen-Pulverdiffraktogramm des in Beispiel 1 erhaltenen Mischoxids;

Fig. 2　das Pulverteilchenverteilungsdiagramm des in Beispiel 1 erhaltenen Mischoxids; und

Fig. 3　die Ladungs- und Entladungskurve des in Beispiel 1 erhaltenen Mischoxids bei der Verwendung als positive Elektrode in einer Lithium-Sekundärbatterie.

Gegenstand der Erfindung sind demnach dotierte ternäre Lithium-Mischoxide der allgemeinen Formel (I) mit einer Kristallstruktur vom Spinell-Typ, die sich als Materialien für Kathoden mit guter Zyklenlebensdaner eignen,

$$Li_y\,Me_x\,Mn_{2-x}\,O_4 \qquad (I)$$

worin bedeuten:

Me mindestens ein Metallkation aus den Gruppen IIa, IIIa, IVa, IIb, IIIb,

IVb, VIb, VIIb und VIII des Periodensystems.

$0 < x < 1$, vorzugsweise $0 < x < 0,5$,

$0 < y \leq 1,2$,

erhältlich durch Umsetzen der zur Erzielung derj eweiligen Mischoxide der Formel (I) erforderlichen Reaktionskomponenten in Form von Hydroxiden und /oder wasserlöslischen Metallsalzen in gelöster Form in einem basischen wäßrigen Medium unter Bildung einer homogenen Suspension. Entfernen von Wasser und gegebenenfalls weiteren Lösungsmitteln von der Suspension der hydroxidischen Reaktionsprodukte und Unterziehen der getrockeneten Reaktionsprodukte einer Hochtemperaturbehandlung durch Erhitzen auf Temperaturen zwischen 500 und 900 °C mit einer Aufheizgeschwindigkeit von 1 bis 20 K/min, wobei sich die jeweiligen Mischoxide in röntgenographisch phasenreiner Form bilden.

Gemäß der Erfindung hat sich gezeigt, daß Dotierungen mit Fremdkationen im Wirtsgitter der erfindungsgemäßen Verbindungen in vielen Fällen sich günstig auswirkende Effekte im Wirtsgitter zur Folge haben. Durch Dotierungen mit Metallkationen verschiedener Oxidationsstufen gelingt es, nicht stöchiometrische Verbindungen mit gezielten Defekten in der Wirtsgitterstruktur herzustellen. Diese Änderungen bewirken eine Stabilisierung der Wirtsgitterstruktur während der elektrochemischen Zyklisierung, wodurch letztendlich eine erhöhte Lebensdauer bei deren Verwendung als Kathodenmaterial erreicht wird.

Die erfindungsgemäßen Mischoxide unterscheiden sich von den bekannten, gattungsgemäßen Mischoxiden darin, daß sie eine vollkommen gleichmäßige Verteilung der Dopanden im Wirtsgitter aufweisen, wodurch bei deren Verwendung als Kathodenmaterialien verbesserte Batterieeigenschaften erzielt werden.

Das Metallkation Me in der obigen Formel (I) ist vorzugsweise mindestens ein aus Übergangsmetallen der 4. Periode des Periodensystems gewähltes Kation. Besonders geeignete Metallkationen sind Eisen, Titan und Aluminium sowie ebenfalls Cobalt und Nickel.

Gegenstand der Erfindung ist ebenso ein Verfahren zur Herstellung der vorgenannten Mischoxide, umfassend das Umsetzen der zur Erzielung der jeweiligen Mischoxide der Formel (I) erforderlichen Reaktionskomponenten in Form von Hydroxiden und/oder wasserlöslichen Metallsalzen in gelöster Form in einem basischen wäßrigen Medium unter Bildung einer homogenen Suspension, Entfernen von Wasser und gegebenenfalls weiteren Lösungsmitteln von der Suspension der hydroxidischen Reaktionsprodukte und Unterziehen der getrockneten Reaktionsprodukte einer Hochtemperaturbehandlung durch Erhitzen auf Temperaturen zwischen 500 und 900 °C mit einer Aufheizgeschwindlgkeit von 1 bis 20 K/min, wobei sich die jeweiligen Mischoxide in röntgenographisch phasenreiner Form bilden.

Das erfindungsgemäße Verfahren ist darin vorteilhaft, daß die Umsetzung der Reaktionskomponenten bei niedrigen Temperaturen, geeigneterweise bei Temperaturen im Bereich von etwa 0-25°C, durchgeführt werden kann. Vorzugsweise erfolgt die Umsetzung bei 2-15°C, weiter vorzugsweise bei 5-10°C.

Gemäß der Erfindung werden die Reaktionskomponenten in Form von Hydroxiden und/oder wasserlöslichen Metallsalzen eingesetzt. In einigen Fällen, beispielsweise bei der Aluminium-Dotierung, können stabilisierte Oxidsole verwendet werden.

Die zur primären Hydroxidfällung nötigen Hydroxidionen können in der Regel nur zum Teil direkt als Metallhydroxid eingebracht werden. Die benötigte Menge an basischen Komponenten kann jedoch in einfacher Weise durch Zugabe aliquoter Teil Ammoniak und/oder wassermischbarer Amine zur Reaktionsmischung erfolgen. Als Amine eignen sich primäre, sekundäre oder tertiäre Amine, beispielsweise Methylamin, Dibutylamin oder Trimethylamin.

Vorteilhaftenveise können die Metallkationen Me in komplexstabilisierter Form der Reaktionsmischung zugesetzt werden. Als stabilisierende Komplexbildner eignen sich insbesondere solche, die als bidentate, tridentate oder polydentate Liganden an dem jeweiligen Metallkation wirken können, wobei das Donoratom Stickstoff, Sauerstoff oder Kohlenstoff sein kann. Als Komplexbildner geeignete Stickstoffliganden können beispielsweise 1,2-Diaminoethan, 1,3-Diaminopropan, N,N,N',N'-Tetramethyldiaminoethan und Triethanolamin genannt werden. Weiterhin ist es möglich, die als Dopanden einzufuhrenden Metallkationen, wie etwa Aluminium und Titan, in Form ihrer 2,4-Pentandionate oder in Form ihrer Alkoxylate einzubringen. Daneben können die Metallkationen, beispielsweise Aluminium, Titan oder Zirkonium, auch in Form ihrer Alkylverbindungen, oder beispielsweise im Falle von Titan oder Zirkonium, in Form ihrer Cyclopentadienylverbindungen, eingesetzt werden.

Als Lösungsmittel für die Umsetzung nach dem erfindungsgemäßen Verfahren eignen sich Wasser oder Wasser/Alkohol-Mischungen. Beim Einsatz von Metallalkylen oder Komplexen mit $\pi$-gebundenen Liganden, beispielsweise Cyclopentadienyl-Liganden, sind Lösungsmittel entsprechend dem spezifischen Charakter der Metall-Kohlenstoff-Bindung bei diesen Reaktionskomponenten zu wählen. Beispielsweise eignen sich hierfür Mischungen von niederen Kohlenwasserstoffen mit wassermischbaren Alkoholen, insbesondere wenn die Copräzipitation langsam erfolgt und die Umsetzung unter Rühren mit hohen Drehzahlen durchgeführt werden kann. In dieser Weise sind auch Fällungen unter Verwendung von zwei miteinander nicht oder nur zum Teil mischbaren Lösungsmitteln durchführbar.

Beim erfindungsgemäßen Verfahren erfolgt die Ausfällung der Festkörperfraktionen simultan und vorzugsweise mit langsamer Geschwindigkeit, so daß eine stabile, das heißt nicht sedimentierende Suspension erhalten wird. Dies ermöglicht letztendlich die Erzielung von Mischoxiden mit äußerst homogener Verteilung der als Dopanden eingeführten Metallkationen. Der Grund für diese homogene Verteilung der Dopanden ist möglicherweise darauf zurückzuführen, daß die bei der Umsetzung gelösten Metallkationen in dem als Zwischenprodukt erhaltenen, "nassen" hydroxidischen Reaktionsprodukt sehr homogen verteilt sind. Diese homogene Verteilung ist ein entscheidender Vorteil gegenüber den bekannten Verfahren zur Herstellung solcher Mischoxide mittels Festkörperreaktionen.

Die so erhaltenen Suspensionen bestehen aus feinsten Teilchen der gebildeten, hydroxidischen Reaktionsprodukte mit sehr enger Teilchengrößenverteilung. Die durchschnittliche Teilchengröße beträgt üblicherweise 10 µm oder weniger. Die Suspensionen zeigen über lange Zeiträume, etwa 5 bis 30 Stunden, keine Sedimentationsneigung. Sie können problemlos bei Raumtemperatur aufbewahrt werden.

Zur Vorbereitung der Umwandlung der Reaktionsprodukte in die Mischoxidstufe müssen Wasser und gegebenenfalls weitere Lösungsmittel von der Suspension entfernt werden, Vorzugsweise wird hierzu die Suspension einer Sprühtrocknung unterworfene welche geeigneterweise bei Temperaturen zwischen 120 und 200°C durchgeführt wird. Ebenso ist es möglich, wenn auch langwieriger, die Suspension einer Gefriertrocknung zu unterziehen. Die Gefriertrocknung erfolgt geeigneterweise von mit flüssigem Stickstoff kugelförmig verfestigten Tropfen der Suspension.

Das getrocknete Reaktionsprodukt liegt in der Regel als lockeres Pulver vor. Wenn dieses Pulver hygroskopisch ist, empfiehlt sich dessen Handhabung unter einem trockenen Schutzgas.

Das so gewonnene, pulverförmige Reaktionsprodukt kann anschließend in einem geeigneten Ofen, beispielsweise einem Muffelofen, einer Hochtemperaturbehandlung unterzogen werden, wobei ein Erhitzen auf 500 bis 900°C, vorzugsweise 600 bis 800°C, erfolgt.

Die so erhaltenen Mischoxide besitzen eine hohe Phasenreinheit und zeichnen sich durch gute elektrochemische Eigenschaften für den Einsatz als Kathodenmaterial aus. Gegenstand der Erfindung ist daher ebenso die Verwendung der erfindungsgemäßen Mischoxide als Kathodenmaterial in Lithium-Sekundärbatterien, beispielsweise in sogenannten "rocking-chair"-Batterien.

Das erfindungsgemäße Verfahren ermöglicht es, die Mischoxide in großen Mengen herzustellen. Da die Reaktionskomponenten in homogener, gelöster Form zur Umsetzung gebracht werden, treten gerade bei der Herstellung größerer Mengen die bei den Festkörperreaktionen bekannten Schwierigkeiten nicht auf. Die Umsetzung der Reaktionskomponenten in homogener Phase erlaubt es insbesondere, kleinste Dopandenmengen sehr gleichmäßig in der Festkörpermatrix zu verteilen, was bei den bekannten Festkörperreaktionen nicht oder nicht in diesem Ausmaß möglich ist.

Die Erfindung wird anhand der nachfolgenden Beispiele näher erläutert.

Beispiel 1

**Herstellung eines Mischoxids der Formel LiFe$_{0.1}$Mn$_{1.9}$O$_4$**

Eine homogene Mischung aus 6,13 g (0.25 Mol) Lithiumhydroxid, 75 ml einer 25 vol.-%-igen wäßrigen Ammoniaklösung und 500 ml demin. Wasser wurde 15 Minuten mit Stickstoff anaerobisiert und dabei auf 5°C gekühlt. Zu dieser klaren Lösung wird unter magnetischem Rühren bei dieser Temperatur eine zuvor anaerobisierte wäßrige Lösung von 184,42 (0,72 Mol) Mangandinitrat-Tetrahydrat, gelöst in 150 ml Wasser, über einen Zeitraum von 5 Stunden zugegeben. Man erhält unter strengem Sauerstoffausschluß eine reinweiße Suspension (Mutter-Suspension).

Zu 250 ml der Mutter-Suspension gibt man über einen Zeitraum von 2 Stunden unter Rühren bei 5°C eine frisch bereitete, anaerobisierte, klare Lösung von 8,16 g (0.02 Mol) Eisentrinitrat-Nonahydrat in 20 ml Wasser zu. Die sich bildende kakaobraun gefärbte Suspension wird bis zur Weiterverarbeitung bei 5°C unter Luftausschluß aufbewahrt. Die so bereitete Suspension zeigt über Stunden keine Neigung zur Sedimentation.

Zur Weiterverarbeitung zu einem Festkörper wird die Suspension unter Rühren auf 20 bis 40°C erwärmt und danach durch Sprühtrocknung (Pumpenleistung: 2 ml/min.. Düse: 0,7 mm, Transportgasfluß: 300 l/h. Eingangstemperatur: 156°C) von anhaftender Feuchtigkeit befreit. Die Sprühtrocknung selbst erfolgt unter Luftzutritt. Das getrocknete schwarze Produkt ist hygroskopisch und muß bis zur Weiterverarbeitung vor Feuchtigkeitszutritt geschützt werden.

Zur Umwandlung in die Oxidphase wurde das Produkt bei Überströmen von getrockneter Luft beginnend bei Raumtemperatur auf 700°C erhitzt. Die Aufheizrate betrugt 3 K/min.. Die Endtemperatur wurde ohne zusätzliche Luftzufuhr für 12 Stunden beibehalten.

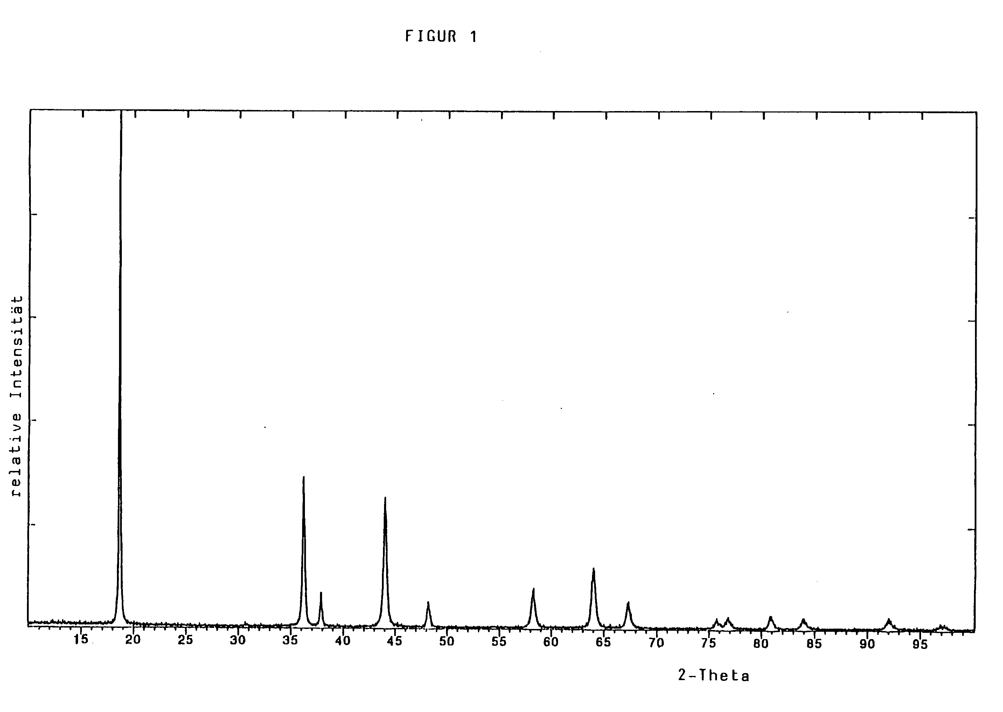

Das Röntgen-Pulver-Difraktogramm des hierbei erhaltenen Mischoxids ist in Figur 1 gezeigt.

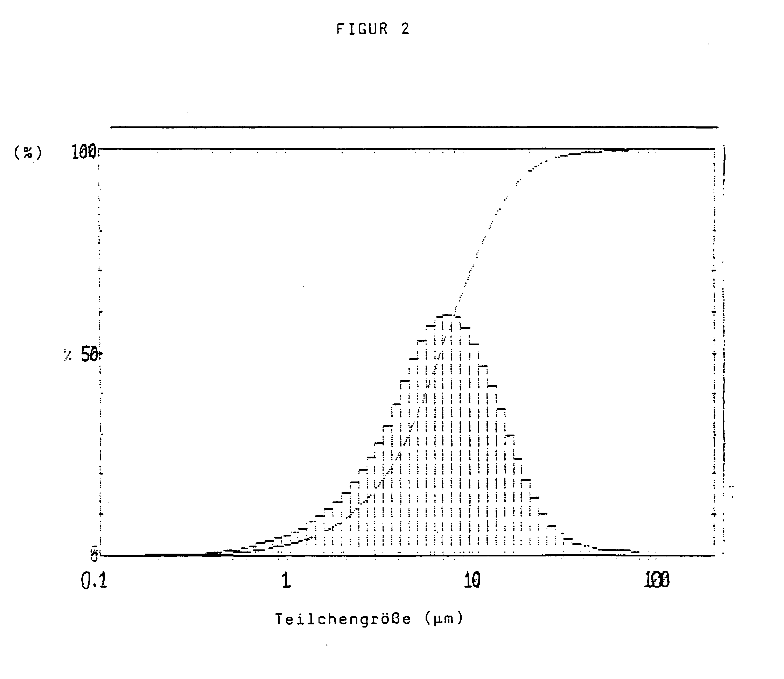

Figur 2 zeigt das Ergebnis einer Teilchengrößenverteilungsanalyse dieses Mischoxids. Wie ersichtlich, liegt die durchschnittliche Teilchengröße (d$_{50}$-Wert) bei etwa 10 µm.

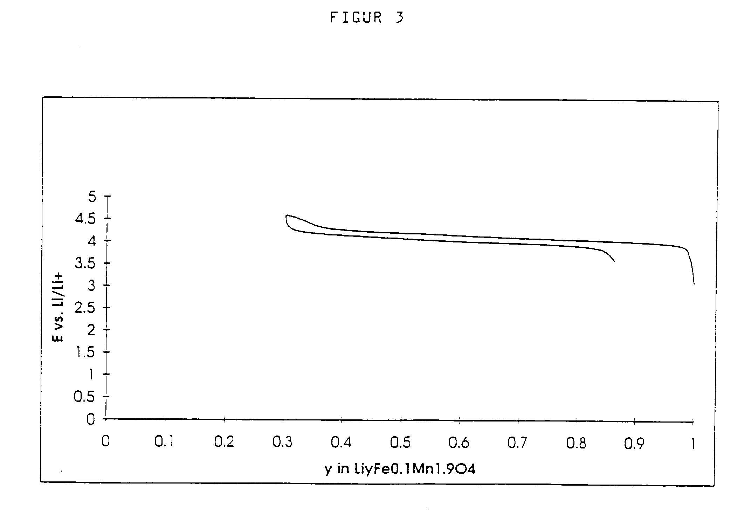

Figur 3 zeigt die Ladungs- und Entladungskurve dieses Mischoxids zwischen 4,6 und 3,5 V bei Verwendung als positive Elektrode in einer Lithium-Sekundärbatterie. Als negative Elektrode diente hierbei Lithiummetall.

Beispiel 2

**Herstellung eines Mischoxids der Formel LiTi$_{0,1}$Mn$_{1,9}$O$_4$**

Zu 250 ml der gemäß Beispiel 1 erhaltenen Mutter-Suspension tropft man, wie im Beispiel 1 beschrieben, 4,56 g (0,02 Mol) Tetraethoxytitan, gelöst in 10 ml anaerobisiertem absolutem Ethanol. Eine hellgelbe Suspension bildet sich erst allmählich infolge der langsamen Hydrolyse des Titanalkoholates. Die sedimentationsstabile Suspension wird durch Sprühtrocknen (Pumpenleistung: 3 ml/min., Düse: 0,7 mm, Transportgasfluß 350 l/h. Eingangstemperatur 160°C) von anhaftender Flüssigkeit befreit. Das Produkt ist hellbraun gefärbt.

Die Umwandlung in die Oxidphase erfolgt wie im Beispiel 1 angegeben.

Beispiel 3

**Herstellung eines Mischoxids der Formel LiNi$_{0,1}$Mn$_{1,5}$O$_4$**

Zu 250 ml der gemäß Beispiel 1 erhaltenen Mutter-Suspension tropft man, wie im Beispiel 1 beschrieben, bei 0°C eine Lösung aus 5,86 g (0,02 Mol) Nickeldinitrat-Hexahydrat und 10 ml anaerobisiertem Wasser. Die hellolivgrüne Suspension wird zum Sprühtrocknen auf 45°C erwärmt und während des Sprühens gerührt (Pumpenleistung: 1 ml/min., Düse: 0,7 mm, Transportgasfluß: 300 l/h, Eingangstemperatur: 157°C, Rühren: 600 U/min). Nach dem Sprühtrocknen wurde ein ockerfarbener, schwach hygroskopischer Festkörper erhalten.

Die Umwandlung in die Oxidphase erfolgt wie in Beispiel 1 angegeben.

**Patentansprüche**

1. Dotierte ternäre Lithium-Mischoxide der allgemeinen Formel (I) mit einer Kristallstruktur vom Spinell-Typ, die sich als Materialien für Kathoden mit guter Zyklenlebensdaner eignen,

$$Li_y \, Me_x \, Mn_{2-x} \, O_4 \qquad (I)$$

worin bedeuten:

Me mindestens ein Metallkation aus den Gruppen IIa, IIIa, IVa, IIb, IIIb, IVb, VIb, VIIb und VIII des Periodensystems.

$0 < x < 1$, vorzugsweise $0 < x < 0,5$,
$0 < y \leq 1,2$,

erhältlich durch Umsetzen der zur Erzielung derjeweiligen Mischoxide der Formel (I) erforderlichen Reaktionskomponenten in Form von Hydroxiden und /oder wasserlöslischen Metallsalzen in gelöster Form in einem basischen wäßrigen Medium unter Bildung einer homogenen Suspension, Entfernen von Wasser und gegebenenfalls weiterer Lösungsmitteln von der Suspension der hydroxidischen Reaktionsprodukte und Unterziehen der getrockneten Reaktionsprodukte einer Hochtemperaturbehandlung durch Erhitzen auf Temperaturen zwischen 500 und 900 °C mit einer Aufheizgeschwindigkeit von 1 bis 20 K/min, wobei sich die jeweiligen Mischoxide in röntgenographisch phasenreiner Form bilden.

2. Ternäre Lithium-Mischoxide nach Anspruch 1, wobei Me mindestens ein aus Übergangsmetallen der vierten Periode des Periodensystems gewähltes Kation ist.

3. Ternäre Lithium-Mischoxide nach Anspruch 1 oder 2, wobei Me ein aus Eisen, Titan, Aluminium, Cobalt und Nickel gewähltes Kation ist.

4. Verfahren zur Herstellung ternärer Lithium-Mischoxide nach mindestens einem der Ansprüche 1 bis 3, umfassend das Umsetzen der zur Erzielung der jeweiligen Mischoxide der Formel (I) erforderlichen Reaktionskomponenten in Form von Hydroxiden und /oder wasserlöslischen Metallsalzen in gelöster Form in einem basischen wäßrigen Medium unter Bildung einer homogenen Suspension, Entfernen von Wasser und gegebenenfalls weiterer Lösungsmitteln von der Suspension der hydroxidischen Reaktionsprodukte und Unterziehen der getrockneten Reaktionsprodukte einer Hochtemperaturbehandlung durch Erhitzen auf Temperaturen zwischen 500 und 900 °C mit einer Aufheizgeschwindigkeit von 1 bis 20 K/min, wobei sich die jeweiligen Mischoxide in röntgenographisch phasenreiner Form bilden.

5. Verfahren nach Anspruch 4, wobei die Umsetzung bei Temperaturen im Bereich von 0-25 °C, vorzugsweise 2-15 °C, weiter vorzugsweise 5-10 °C, durchgeführt wird.

6. Verfahren nach Anspruch 4 oder 5, wobei als Lösungsmittel für die Umsetzung Wasser oder Wasser/Alkohol- Mischungen oder Gemische von niederen Kohlenwasserstoffen mit wassermischbaren Alkoholen eingesetzt werden.

7. Verfahren nach mindestens einem der Ansprüche 4 bis 6, wobei die Einstellung des basischen Mediums durch Zugabe von Ammoniak und/oder wassermischbaren Aminen erfolgt.

**8.** Verfahren nach mindestens einem der Ansprüche 4 bis 7, wobei die Metallkationen Me in komplexstabilisierter Form zur Umsetzung gebracht werden.

**9.** Verfahren nach mindestens einem der Ansprüche 4 bis 8, wobei die Entfernung von Wasser und gegebenenfalls weiterer Lösungsmittel durch Sprühtrocknung der Suspension erfolgt.

**10.** Verfahren nach Anspruch 9, wobei die Sprühtrocknung bei Temperaturen zwischen 120 und 200 °C durchgeführt wird.

**11.** Verfahren nach mindestens einem der Ansprüche 4 bis 8, wobei die Entfernung von Wasser und gegebenenfalls weiterer Lösungsmittel durch Gefriertrocknung der Suspension erfolgt.

**12.** Verwendung der Lithium-Mischoxide nach den Ansprüchen 1 bis 3 oder der gemäß dem Verfahren nach den Ansprüchen 4 bis 11 erhaltenen Lithium-Mischoxide als Kathodenmaterial in Lithium-Sekundärbatterien.

## Claims

**1.** Doped ternary mixed lithium oxides of the general formula (I) having a spinel-type crystal structure, which are suitable as materials for cathodes having a good cycle durability

$$Li_y\ Me_x\ Mn_{2-x}\ O_4 \qquad (I)$$

where:

Me represents at least one metal cation from the groups IIa, IIIa, IVa, IIb, IIIb, IVb, VIb, VIIb and VIII of the Periodic Table of the Elements,

$0 < x < 1$, preferably $0 < x < 0.5$,
$0 < y \leq 1.2$,
obtainable by reaction components required to obtain the mixed oxides in question of formula (I) being reacted in the form of hydroxides and/or water-soluble metal salts in dissolved form in a basic aqueous medium to form a homogeneous suspension, water and possibly further solvents being removed from the suspension of the hydroxylic reaction products, and the dried reaction products being subjected to a high-temperature treatment by heating to temperatures of between 500 and 900°C involving a heating rate of from 1 to 20 K/min, the mixed oxides in question being formed in roentgenographically pure-phase form.

**2.** Ternary mixed lithium oxides according to Claim 1, wherein Me is at least one cation selected from transition metals of the fourth period of the Periodic Table of the Elements.

**3.** Ternary mixed lithium oxides according to Claim 1 or 2, wherein Me is a cation selected from iron, titanium, aluminium, cobalt and nickel.

**4.** Process for preparing ternary mixed lithium oxides according to at least one of Claims 1 to 3, which comprises the steps of reaction components required to obtain the mixed oxides in question of formula (I) being reacted in the form of hydroxides and/or water-soluble metal salts in dissolved form in a basic aqueous medium to form a homogeneous suspension, water and possibly further solvents being removed from the suspension of the hydroxylic reaction products, and the dried reaction products being subjected to a high-temperature treatment by heating to temperatures of between 500 and 900°C involving a heating rate of from 1 to 20 K/min, the mixed oxides in question being formed in roentgenographically pure-phase form.

**5.** Process according to Claim 4, wherein the reaction is carried out at temperatures in the range of 0-25°C, preferably 2-15°C, more preferably 5-10°C.

**6.** Process according to Claim 4 or 5, wherein the solvent used for the reaction comprises water or water/alcohol mixtures or mixtures of low molecular-weight hydrocarbons with water-miscible alcohols.

**7.** Process according to at least one of Claims 4 to 6, wherein. the standardization of the basic medium is effected by the addition of ammonia and/or water-miscible amines.

**8.** Process according to at least one of Claims 4 to 7, wherein the metal cations Me entering into the reac-. tion are in a form stabilized by complexing.

**9.** Process according to at least one of Claims 4 to 8, wherein the removal of water and possibly further solvents is effected by the suspension being spray-dried.

**10.** Process according to Claim 9, wherein the spray-drying is carried out at temperatures of between 120 and 200°C.

**11.** Process according to at least one of Claims 4 to 8, wherein the removal of water and possibly further solvents is effected by the suspension being freeze-dried.

**12.** Use of the mixed lithium oxides according to Claims 1 to 3 or of the mixed lithium oxides obtained in accordance with the process according to Claims 4 to 11 as a cathode material in secondary lithium batteries.

**Revendications**

**1.** Oxydes mixtes de lithium ternaires dopés, de formule générale (I) avec une structure cristalline de type Spinelle, qui conviennent comme matériaux pour cathodes avec une bonne durée de vie de cycles,

$$Li_y\ Me_x\ Mn_{2-x}\ O_4 \qquad (I),$$

où:

Me signifie au moins un cation métallique des groupes IIa, IIIa, IVa, IIb, IIIb, IVb, VIb, VIIb, et VIII de la classification périodique,

0 < x < 1, de préférence 0< x < 0,5,
0 < y ≤ 1,2,
pouvant être obtenus par réaction des réactifs nécessaires à l'obtention des oxydes mixtes respectifs de formule (I) sous la forme d'hydroxydes et/ou de sels métalliques solubles dans l'eau sous forme dissoute dans un milieu aqueux basique avec la formation d'une suspension homogène, élimination de l'eau et le cas échéant d'autres solvants de la suspension des produits de réaction hydroxiques et application aux produits de réaction séchés d'un traitement à haute température par chauffage à des températures comprises entre 500 et 900°C à une vitesse d'échauffement de 1 à 20K/mn, les oxydes mixtes correspondants se formant sous forme exempte de déphasage en radiographie.

**2.** Oxydes mixtes de lithium ternaires selon la revendication 1, dans lesquels Me est au moins un cation choisi parmi les métaux de transition de la quatrième période de la classification périodique.

**3.** Oxydes mixtes de lithium ternaire selon la revendication 1 ou 2, dans lesquels Me est un cation choisi parmi le fer, le titane, l'aluminium, le cobalt et le nickel.

**4.** Procédé pour fabriquer des oxydes mixtes de lithium ternaire selon l'une au moins des revendications 1 à 3, comprenant la réaction des réactifs nécessaires à l'obtention des oxydes mixtes respectifs de formule (I) sous la forme d'hydroxydes et/ou de sels métalliques solubles dans l'eau sous forme dissoute dans un milieu aqueux basique avec formation d'une suspension homogène, l'élimination de l'eau et le cas échéant d'autres solvants de la suspension des produits de réaction hydroxiques et l'application aux produits de réaction séchés d'un traitement à haute température par chauffage à des températures comprises entre 500 et 900°C à une vitesse d'échauffement de 1 à 20K/mn, les oxydes mixtes correspondant se formant sous forme exempte de déphasage en radiographie.

**5.** Procédé selon la revendication 4, dans lequel la réaction est effectuée à des températures dans la plage de 0 à 25°C, de préférence de 2 à 15°C, de manière encore plus préférée de 5 à 10°C.

**6.** Procédé selon la revendication 4 ou 5, dans lequel on utilise comme solvants pour la réaction, de l'eau ou des mélanges eau/alcool, ou des mélanges d'hydrocarbures inférieurs avec des alcools miscibles avec l'eau.

**7.** Procédé selon l'une au moins des revendications 4 à 6, dans lequel l'ajustement du milieu basique est effectué par apport d'ammoniaque et/ou d'amines miscibles avec l'eau.

**8.** Procédé selon l'une au moins des revendications 4 à 7, dans lequel pour la réaction les cations métalliques Me sont apportés sous forme de complexes stabilisés.

**9.** Procédé selon l'une au moins des revendications 4 à 8, dans lequel l'élimination de l'eau et le cas échéant d'autres solvants s'effectue en séchant la suspension par pulvérisation.

**10.** Procédé selon la revendication 9, dans lequel on effectue le séchage par pulvérisation à des températures entre 120 et 200°C.

**11.** Procédé selon l'une au moins des revendications 4 à 8, dans lequel l'élimination de l'eau et le cas échéant d'autres solvants s'effectue par lyophilisation de la suspension.

**12.** Utilisation des oxydes mixtes de lithium selon les revendications 1 à 3 ou des oxydes mixtes de lithium obtenus par le procédé selon les revendications 4 à 11 comme matériau de cathode dans des batteries secondaires au lithium.

**FIGUR 1**

FIGUR 2

Teilchengröße (µm)

FIGUR 3